# EUROPÄISCHE PATENTSCHRIFT

(11) **EP 1 065 867 B1**
(45) Veröffentlichungstag und Bekanntmachung des Hinweises auf die Patenterteilung: **19.01.2005**
(21) Anmeldenummer: 00111413.1
(22) Anmeldetag: 26.05.2000
(51) Int. Cl.: H04M 3/42, H04M 3/38, H04M 3/22, G06F 1/00, H04L 29/06

(54) **Verfahren zum Konfigurieren von Benutzerrechten für eine Kommunikationsanlage**
Method for configuring user entitlements for a communication exchange
Méthode pour configurer des droits d'utilisateurs pour un central de communication

(30) Priorität: 29.06.1999 DE 19929690
(43) Veröffentlichungstag der Anmeldung: 03.01.2001
(73) Patentinhaber: SIEMENS AKTIENGESELLSCHAFT, 80333 München (DE)
(72) Erfinder: Asshauer, Friedrich, 82538 Geretsried (DE); Vander Sypt, Lucien, 9100 St. Niklaas (BE); Woegerbauer, Johannes, 83607 Holzkirchen (DE); van Ijsseldijk, Stefano, 81475 München (DE)

(56) Entgegenhaltungen:
- DE-A- 19 541 315
- BALDWIN R W: "Naming and grouping privileges to simplify security management in large databases" , PROCEEDINGS OF THE SYMPOSIUM ON RESEARCH IN SECURITY AND PRIVACY. OAKLAND, MAY 7 - 9, 1990, LOS ALAMITOS, IEEE COMP. SOC. PRESS, US, VOL. SYMP. 11, PAGE(S) 116-132 XP010020192 ISBN: 0-8186-2060-9 * Seite 116 - Seite 120 *

## Beschreibung

Die Erfindung betrifft ein Verfahren zum Konfigurieren von Benutzerrechten für eine Kommunikationsanlage gemäß dem Oberbegriff des Patentanspruchs 1.

Aus der Produktschrift "Sonderausgabe telcom report und Siemens Magazin Com: ISDN im Büro - HICOM", Siemens AG, Berlin und München, 1985, insbesondere der Seiten 32 bis 37, ist eine private Kommunikationsanlage HICOM bekannt, bei der über einen mit der Kommunikationsanlage verbundenen sogenannten Betriebs- und Datenserver ausgehend von einer kommunikationsanlagen-externen Administrationseinrichtung eine Fernverwaltung bzw. eine Fernwartung der Kommunikationsanlage möglich ist. Durch die Fernverwaltung können Änderungen an der Kommunikationsanlage beispielsweise eine Konfigurierung von Benutzerrechten ohne einen Einsatz von Personal vor Ort an der Kommunikationsanlage vorgenommen werden. Hierdurch kann einerseits eine kürzere Reaktionszeit auf Änderungswünsche von Kunden und andererseits eine erhöhte Verfügbarkeit der Kommunikationsanlage erreicht werden.

Ein Zugang - in der Literatur häufig als Administrationsoder Wartungszugang bezeichnet - von der Administrationseinrichtung zur Kommunikationsanlage erfolgt dabei über ein öffentliches Kommunikationsnetz mit Hilfe eines geeigneten Modems. Alternativ kann die Administrationseinrichtung - wie auf Seite 55, Bild 5 ersichtlich - aber auch vor Ort direkt über eine V.24-Schnittstelle an den Betriebs- und Datenserver der Kommunikationsanlage angeschlossen werden.

Diese Administrations- und Wartungszugänge zur Kommunikationsanlage bieten einem unberechtigten Benutzer einen Angriffspunkt für eine Manipulation bzw. einen Mißbrauch der Kommunikationsanlage, d.h. für ein unberechtigtes Auslesen von Daten aus der Kommunikationsanlage bzw. für ein unberechtigtes Verändern von Daten in der Kommunikationsanlage. Um gewährleisten zu können, daß Benutzer einer Kommunikationsanlage nur Zugriff auf Daten und Funktionen der Kommunikationsanlage erhalten die für ihren Aufgabenbereich erforderlich sind, ist es aus den Empfehlungen des BSI für den Bereich der Bundesbehörden: "Sicherheitsanforderungen an TK-Anlagen", 1996, insbesondere der Seiten 7 und 8 bekannt, unterschiedliche Nutzerkreise für die Kommunikationsanlage zu definieren. Jedem Nutzerkreis sind dabei jeweils verschiedene konfigurierbare Zugriffsrechte für die Kommunikationsanlage zuweisbar. Ein Nutzerkreis umfaßt eine Gruppe von Benutzern, denen die gleichen Zugriffsrechte auf Daten und Funktionen der Kommunikationsanlage zugewiesen sind. Innerhalb eines Nutzerkreises, d.h. für die in einem Nutzerkreis zusammengefaßten Benutzer, können diese Zugriffsrechte dabei beliebig zuwiesen werden.

Des Weiteren ist aus R. Baldwin: "Naming and Grouping Privileges to Simplify Security Management in Large Databases", Proceedings of the symposium on research in security and privacy, Oakland, 1990, XP010020192, ISBN: 0-8186-2060-9, bekannt, Zugriffsrechte in Gruppen zusammen zu fassen.

Die verschiedenen Zugriffsrechte für eine Kommunikationsanlage sind dabei häufig standardmäßig dem Service, d.h. in der Regel dem Hersteller der Kommunikationsanlage, für eine Wartung der Kommunikationsanlage zugeordnet. Wünscht nun ein Kunde, daß ihm bestimmte Zugriffsrechte übertragen werden, so muß eine individuelle Konfiguration der Zugriffsrechte für die Kommunikationsanlage erfolgen. Dies ist mit einem erheblichen Aufwand verbunden, da in der Kommunikationsanlage einerseits die Zugriffsrechte für den Kunden neu eingerichtet, andererseits die bestehenden Zugriffsrechte auf die Kommunikationsanlage für den Service gelöscht werden müssen.

In Fällen, in denen die Zugriffsrechte für die Kommunikationsanlage standardmäßig einem Benutzer bzw. einem Nutzerkreis - beispielsweise dem Service - zugeordnet sind, besitzt dieser Benutzer bzw. Nutzerkreis Zugriffsrechte - beispielsweise kunden- oder administrationsindividuelle Rechte - die er in der Regel nicht besitzen dürfte. Hierdurch ist ein Angriffspunkt für eine Manipulation bzw. ein Mißbrauch der Kommunikationsanlage gegeben.

Der vorliegenden Erfindung liegt daher die Aufgabe zugrunde, ein Verfahren anzugeben, durch welches die Sicherheit einer Kommunikationsanlage erhöht wird.

Gelöst wird die Aufgabe ausgehend von den Merkmalen des Oberbegriffs des Patentanspruchs 1 durch dessen kennzeichnende Merkmale.

Ein wesentlicher Vorteil des erfindungsgemäßen Verfahrens besteht darin, daß durch ein festes Zuordnen einer vorgegebenen, nicht veränderbaren Gruppe von Zugriffsrechten - im weiteren kurz als Zugriffsrechte-Gruppe bezeichnet - zu einem Nutzerkreis, die diesem Nutzerkreis zugeordneten Benutzer nur noch Zugriff auf Daten und Funktionen der Kommunikationsanlage innerhalb dieser fest vorgegebenen Zugriffsrechte erhalten. Somit wird ein unberechtigter Zugriff auf Daten und Funktionen der Kommunikationsanlage, wie er durch ein beliebiges Zuweisen von Zugriffsrechten - im weiteren als Benutzerrechte bezeichnet - innerhalb eines Nutzerkreises bei einem falschen bzw. unauthorisierten Zuweisen ermöglicht werden kann, auf einfache Weise unterbunden.

Ein weiterer Vorteil des erfindungsgemäßen Verfahrens besteht darin, daß bei einem Anmelden eines einem zweiten Nutzerkreis - z.B. dem Kundenkreis - zugeordneten Benutzers an der Kommunikationsanlage alle dem zweiten Nutzerkreis zugeordneten Benutzerrechte automatisch von einem ersten Nutzerkreis - z.B. dem Service - auf den dem zweiten Nutzerkreis zugeordneten Benutzer übertragen werden. Hierbei verlieren die, dem ersten Nutzerkreis zugeordneten Benutzer automatisch ihre Benutzerrechte. Somit wird erreicht, daß nach einem Anmelden eines dem zweiten Nutzerkreis zugeordneten Benutzers an der Kommunikationsanlage nur noch Benutzer dieses zweiten Nutzerkreises Zugriff auf die nutzerkreis-individuellen Daten besitzen und ein unauthorisierter Zugriff durch ein dem ersten Nutzerkreis zugeordneten Benutzer - beispielsweise ein Zugriff auf kundenindividuelle Daten durch den Service - unterbunden wird. Durch das erfindungsgemäße Verfahren wird der Komfort beim Konfigurieren der Benutzerrechte einer Kommunikationsanlage auf einfache Weise erhöht.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten;
- Fig. 2a:: eine Tabelle zur schematischen Darstellung einer standardmäßigen Zuordnung von Zugriffsrechte-Gruppen zu Nutzerkreisen;
- Fig. 2b:: eine Tabelle zur schematischen Darstellung der Zuordnung der Zugriffsrechte-Gruppen zu den Nutzerkreisen nach einem Einrichten bzw. Anmelden neuer Benutzer an der Kommunikationsanlage.

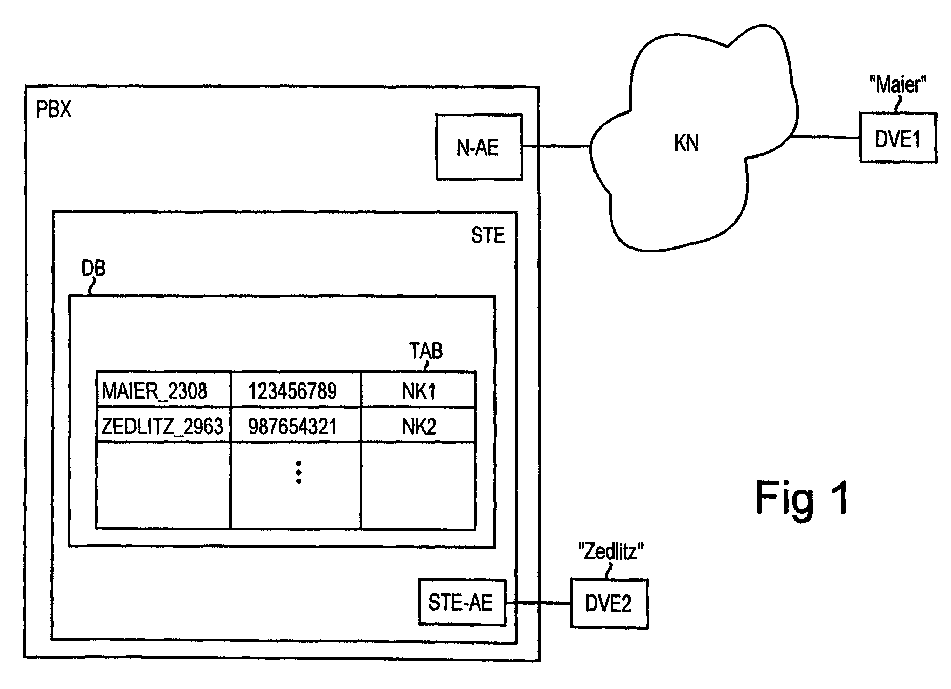

Fig. 1 zeigt in einer schematischen Darstellung eine Kommunikationsanlage PBX (Private Branch Exchange), die über eine Netz-Anschlußeinheit N-AE mit einem Kommunikationsnetz KN verbunden ist. An das Kommunikationsnetz KN ist eine erste Datenverarbeitungseinrichtung DVE1 - beispielsweise ein sogenannter 'Personal Computer' oder eine sogenannte 'Workstation' - angeschlossen. Das Kommunikationsnetz KN kann beispielsweise ein analoges Kommunikationsnetz sein, bei dem ein Anschluß der ersten Datenverarbeitungseinrichtung DVE1 an das Kommunikationsnetz KN über ein Modem erfolgt. Alternativ ist das Kommunikationsnetz KN ein digitales ISDN-orientiertes Kommunikationsnetz (Integrated Services Digital Network), bei dem ein Anschluß der ersten Datenverarbeitungseinrichtung DVE1 an das Kommunikationsnetz KN über einen Basisanschluß, auch als Sₒ-Schnittstelle bezeichnet, erfolgt. Der Zugang der ersten Datenverarbeitungseinrichtung DVE1 an die Kommunikationsanlage PBX über das Kommunikationsnetz KN wird in der Literatur häufig als 'Remote-Zugang' bezeichnet. Die erste Datenverarbeitungseinrichtung DVE1 ist im vorliegenden Ausführungsbeispiel einem Benutzer "Maier" zugeordnet.

Des weiteren ist eine zweite Datenverarbeitungseinrichtung DVE2 über eine in einer Steuereinheit STE der Kommunikationsanlage PBX angeordnete System-Anschlußeinheit STE-AE an die Kommunikationsanlage PBX angeschlossen. Ein Anschluß an die Kommunikationsanlage PBX erfolgt dabei beispielsweise über eine durch die ITU (International Telecommunication Union) standardisierte V.24-Schnittstelle. Der direkte Zugang der zweiten Datenverarbeitungseinrichtung DVE2 an die Kommunikationsanlage PBX über die System-Anschlußeinheit STE-AE wird in der Literatur häufig als 'Lokal-Zugang' bezeichnet. Die zweite Datenverarbeitungseinrichtung DVE2 ist im vorliegenden Ausführungsbeispiel einem Benutzer "Zedlitz" zugeordnet.

In einer Datenbasis DB der Steuereinheit STE der Kommunikationsanlage PBX ist für eine Speicherung von, für eine Realisierung des erfindungsgemäßen Verfahrens notwendigen Informationen eine Tabelle TAB eingerichtet.

In der Tabelle TAB sind dabei Informationen über die an der Kommunikationsanlage PBX eingerichteten Benutzer gespeichert. Beim vorliegenden Ausführungsbeispiel ist für jeden Benutzer ein dem Benutzer zugeordnete Benutzername, ein aus einer beliebigen 1 - 16 Zeichen langen Zeichenfolge bestehendes Paßwort und eine Information über eine Zuordnung des jeweiligen Benutzers zu einem Nutzerkreis NK1,...,NK5 hinterlegt. Beispielhaft sind für den Benutzer "Maier" ein Benutzername MAIER_2308, ein Paßwort 123456789 und eine Information NK1 über die Zuordnung zum ersten Nutzerkreis NK1 gespeichert. Für den Benutzer "Zedlitz" ist ein Benutzername ZEDLITZ_2308, ein Paßwort 987654321 und eine Information NK2 über die Zuordnung zum zweiten Nutzerkreis NK2 gespeichert.

Im vorliegenden Ausführungsbeispiel sind insgesamt fünf unterschiedliche Nutzerkreise NK1,...,NK5 definiert. Hierbei ist für jeden der Nutzerkreise NK1,...,NK5 eine nutzerkreisindividuelle Zugriffsrechte-Gruppe ZG-1,...,ZG-5 bestehend aus einer vorgegebenen, nicht veränderbaren Gruppe von Benutzerrechten definiert.

Im Rahmen einer Anmeldung eines Benutzers an der Kommunikationsanlage PBX wird der Benutzer durch die Kommunikationsanlage PBX dazu aufgefordert seinen Benutzernamen und ein ihm zugeordnetes Paßwort an der ihm zugeordneten Datenverarbeitungseinrichtung DVE1, DVE2 einzugeben. Der eingegebene Benutzername und das eingegebene Paßwort werden von der Datenverarbeitungseinrichtung DVE1, DVE2 an die Steuereinheit STE der Kommunikationsanlage PBX weitergeleitet, in der eine Überprüfung der eingegebenen Informationen erfolgt. Anhand des übermittelten Benutzernamens erfolgt in der Steuereinheit STE der Kommunikationsanlage PBX in einem ersten Schritt eine Identifizierung des Benutzers. Anhand des übermittelten Paßwortes erfolgt anschließend die Authentisierung des Benutzers. Stimmt das übermittelte Paßwort mit dem, dem übermittelten Benutzernamen in der Tabelle TAB zugeordnet gespeicherten Paßwort überein, erhält der Benutzer Zugriff auf die Kommunikationsanlage PBX im Rahmen der durch die gespeicherte Information über die Zuordnung zu einem jeweiligen Nutzerkreis NK1,..., NK5 ausgewählten Benutzerrechte. Gibt beispielsweise der Benutzer "Maier" an der ersten Datenverarbeitungseinrichtung DVE1 den ihm zugeordneten Benutzernamen MAIER_2308 und das Paßwort 123456789 ein, erhält er nachfolgend im Rahmen der für den ersten Nutzerkreis NK1 definierten Benutzerrechte Zugriff auf Daten und Funktionen der Kommunikationsanlage PBX.

Wie bereits in der Beschreibungseinleitung erwähnt, sind die verschiedenen Benutzerrechte bzw. Zugriffsrechte-Gruppen ZG-1,...,ZG-5 für die Kommunikationsanlage häufig standardmäßig dem Service, d.h. nur einem einzelnen Nutzerkreis zugeordnet. Hierbei ist in der Regel in der Tabelle TAB nur ein einzelner dem ersten Nutzerkreis NK1 zugeordneter Benutzer eingerichtet. Beim Hochfahren der Kommunikationsanlage PBX wird durch die Steuereinheit STE der Kommunikationsanlage PBX überprüft, welche Benutzer in der Tabelle TAB eingetragen sind und welchen Nutzerkreisen NK1,...,NK5 die Benutzer zugeordnet sind. Anschließend werden den Benutzern die durch ihre Zugehörigkeit zu einem Nutzerkreis NK1,...,NK5 in der entsprechenden Zugriffsrechte-Gruppe ZG-1,...,ZG-5 zusammengefaßten Benutzerrechte zugewiesen. Ist für einen Nutzerkreis NK1,...,NK5 kein Benutzer in der Tabelle TAB eingetragen werden die in der entsprechenden Zugriffsrechte-Gruppe ZG-1,..., ZG-5 zusammengefaßten Benutzerrechte standardmäßig den Benutzern des ersten Nutzerkreises NK1, d.h. dem Service zugeordnet. Alternativ können die in der entsprechenden Zugriffsrechte-Gruppe ZG-1,...,ZG-5 zusammengefaßten Benutzerrechte einem beliebigen anderen Nutzerkreis NK2,...,NK5 zugeordnet werden. Ist nun standardmäßig - wie oben beschrieben - lediglich ein Benutzer in der Tabelle TAB eingetragen, werden diesem Benutzer alle Benutzerrechte der Kommunikationsanlage PBX zugewiesen.

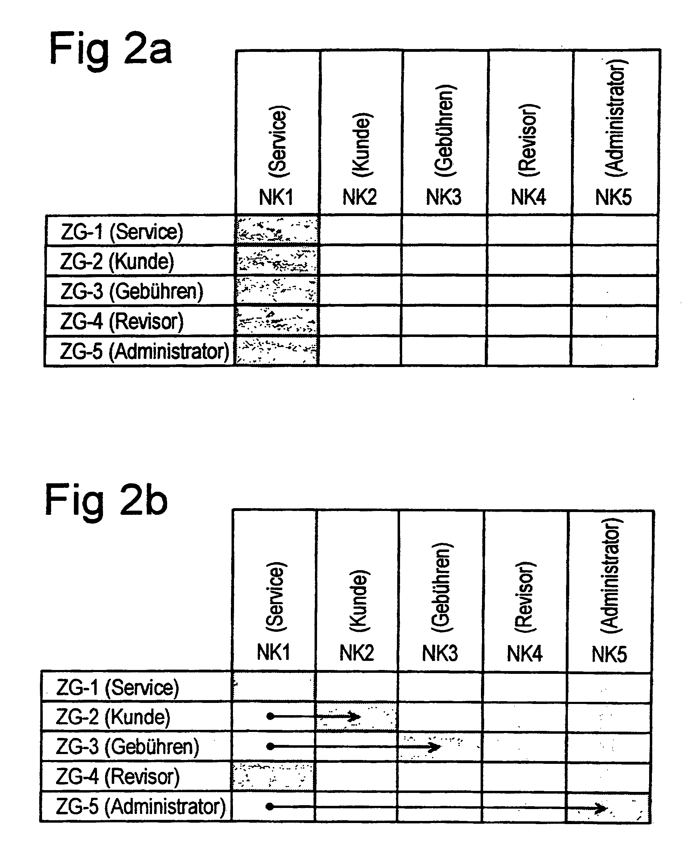

Fig. 2a zeigt eine Tabelle zur schematischen Darstellung der Zuordnung der Zugriffsrechte-Gruppen ZG-1,...,ZG-5 zu den jeweiligen in der Kommunikationsanlage PBX eingerichteten Nutzerkreisen NK1,...,NK5 bei einer derartigen standardmäßigen Zuordnung der Benutzerrechte. Beim vorliegenden Ausführungsbeispiel sind in der Kommunikationsanlage PBX sowohl fünf unterschiedliche Nutzerkreise NK1,...,NK5 als auch fünf unterschiedliche Zugriffsrechte-Gruppen ZG-1,...,ZG-5 standardmäßig eingerichtet.

Hierbei sind in einer ersten Zugriffsrechte-Gruppe ZG-1 die Benutzerrechte für den Service zusammengefaßt. Die Benutzerrechte für den Service umfassen beispielsweise Zugriffsrechte auf Administrationsdaten der Kommunikationsanlage PBX die von keinem anderen Nutzerkreis abgedeckt werden. In der zweiten Zugriffsrechte-Gruppe ZG-2 sind die Benutzerrechte für den Kunden zusammengefaßt. Die Benutzerrechte für den Kunden umfassen dabei beispielsweise Zugriffsrechte auf kundenvertrauliche Daten, wie z.B. PIN-Nummern (Personal Identification Number) oder die Berechtigung zur Ausführung von kundenspezifischen Aktionen, wie z.B. das Erstellen von Kurzwahllisten. In der dritten Zugriffsrechte-Gruppe ZG-3 sind die Benutzerrechte für die Gebühren zusammengefaßt. Die Benutzerrechte für die Gebühren umfassen dabei beispielsweise Zugriffsrechte auf Parameter bei der Gebührenerfassung, wie z.B. die Festlegung von Gesprächsgebühren oder die Berechtigung zum Lesen und Löschen von Gebührendatensätzen. In der vierten Zugriffsrechte-Gruppe ZG-4 sind die Benutzerrechte für einen Revisor zusammengefaßt. Die Benutzerrechte für den Revisor umfassen dabei beispielsweise Zugriffsrechte zur Auswertung und Archivierung sicherheitsrelevanter Protokolldateien. In der fünften Zugriffsrechte-Gruppe ZG-5 sind die Benutzerrechte für einen Administrator zusammengefaßt. Die Benutzerrechte für den Administrator umfassen dabei beispielsweise Zugriffsrechte für das Einrichten und Löschen von Benutzern der Kommunikationsanlage PBX und für das Zuweisen eines Benutzers zu einem Nutzerkreis NK1,...,NK5.

Analog zu den Zugriffsrechte-Gruppen ZG-1,...,ZG-5 sind in dem in der Kommunikationsanlage PBX eingerichtete ersten Nutzerkreis NK1 dem Service, d.h. in der Regel dem Hersteller der Kommunikationsanlage PBX, zugehörige Benutzer zusammengefaßt. Im zweiten Nutzerkreis NK2 sind die dem Kunden zugeordneten Benutzer, im dritten Nutzerkreis NK3 sind die einer Gebührengruppe zugeordneten Benutzer, im vierten Nutzerkreis NK4 sind die einer Revisorgruppe zugeordneten Benutzer und im fünften Nutzerkreis NK5 sind die Administratoren für die Kommunikationsanlage PBX zusammengefaßt.

Im vorliegenden Ausführungsbeispiel sind standardmäßig die in der ersten bis fünften Zugriffsrechte-Gruppe ZG-1,..., ZG-5 zusammengefaßten Benutzerrechte dem ersten Nutzerkreis NK1, d.h. dem Service zugeordnet. Dies wird dadurch erreicht, daß standardmäßig ausschließlich dem ersten Nutzerkreis NK1 zugeordnete Benutzer an der Kommunikationsanlage PBX eingerichtet sind.

Fig. 2b zeigt eine Tabelle zur schematischen Darstellung der Zuordnung von Zugriffsrechte-Gruppen ZG-1,...,ZG-5 zu den jeweiligen in der Kommunikationsanlage PBX eingerichteten Nutzerkreisen NK1,...,NK5 nach einem Einrichten bzw. Anmelden neuer Benutzer an der Kommunikationsanlage PBX.

Im vorliegenden Ausführungsbeispiel werden Benutzer für den zweiten Nutzerkreis NK2, d.h. für den Kunden, für den dritten Nutzerkreis NK3, d.h. für die Gebührengruppe und für den fünften Nutzerkreis NK5, d.h. für Administratoren der Kommunikationsanlage PBX eingerichtet. Beispielhaft ist in der Figur 1 ein dem zweiten Nutzerkreis NK2 zugeordneter Benutzer "Zedlitz" dargestellt. Nach einem Anmelden einer der an der Kommunikationsanlage PBX eingerichteten Benutzer "Maier", "Zedlitz",... werden infolge des erfolgten Einrichtens dieser Benutzer "Maier", "Zedlitz",... an der Kommunikationsanlage PBX automatisch alle in der zweiten Zugriffsrechte-Gruppe ZG-2 zusammengefaßten Benutzerrechte vom ersten Nutzerkreis NK1 auf den zweiten Nutzerkreis NK2 übertragen (in der Figur durch den Pfeil angedeutet). Analog werden die in der dritten Zugriffsrechte-Gruppe ZG-3 zusammengefaßten Benutzerrechte vom ersten Nutzerkreis NK1 auf den dritten Nutzerkreis NK3 und die in der fünften Zugriffsrechte-Gruppe ZG-5 zusammengefaßten Benutzerrechte vom ersten Nutzerkreis NK1 auf den fünften Nutzerkreis NK3 übertragen (in der Figur durch den Pfeil angedeutet). Die im ersten Nutzerkreis NK1 zusammengefaßten Benutzer verlieren dabei automatisch die ihnen bisher zugeordneten kunden-, gebühren- und administratorindividuellen Benutzerrechte.

Durch das beschriebene Verfahren wird auf einfache Weise gewährleistet, daß nach einem Einrichten und einem nachfolgenden Anmelden eines Benutzers "Maier", "Zedlitz",... die dem ersten Nutzerkreises NK1 zugeordnete Benutzer keinen unauthorisierten Zugriff auf kunden-, gebühren- bzw. administratorindividuelle Daten und Funktionen der Kommunikationsanlage PBX mehr erhalten.

## Patentansprüche

1. Verfahren zum Konfigurieren von Benutzerrechten für eine Kommunikationsanlage (PBX),
bei dem eine Mehrzahl von Nutzerkreisen (NK1,...,NK5) eingerichtet sind, denen jeweils mindestens ein Benutzer (Maier, Zedlitz) und Benutzerrechte zuordenbar sind, bei welchem einem ersten Nutzerkreis (NK1) mindestens eine Zugriffsrechte-Gruppe (ZG-1,..., ZG-5) aus jeweils vorgegebenen, nutzer-kreis-individuellen Benutzerrechten fest zugeordnet wird,
**dadurch gekennzeichnet,**
**dass** bei einem Anmelden eines einem zweiten Nutzerkreis (NK2) zugeordneten Benutzers dem zweiten Nutzerkreis (NK2) zugeordnete Benutzerrechte in Form einer Zugriffsrechte-Gruppe (ZG2) automatisch vom ersten Nutzerkreis (NK1) auf den zweiten Nutzerkreis (NK2) übertragen werden, wobei der erste Nutzerkreis (NK1) die Benutzerrechte dieser Zugriffsrechte-Gruppe (ZG2) verliert.

2. Verfahren nach Anspruch 1,
**dadurch gekennzeichnet,**
**daß** einem Nutzerkreis (NK1,...,NK5) eine Mehrzahl von Zugriffsrechte-Gruppen (ZG-1,...,ZG-5) zugeordnet werden.

3. Verfahren nach Anspruch 1 oder 2,
**dadurch gekennzeichnet,**
**daß** in der Kommunikationsanlage (PBX) ein dem Benutzer (Maier, Zedlitz) zugeordneter Benutzername (Maier_2308, Zedlitz_2963), ein dem Benutzer (Maier, Zedlitz) zugeordnetes Paßwort (123456789, 987654321) und eine Information über die Zuordnung des Benutzers (Maier, Zedlitz) zu einem Nutzerkreis (NK1,...,NK5) gespeichert werden.

4. Verfahren nach Anspruch 3,
**dadurch gekennzeichnet,**
**daß** bei einem Hochfahren der Kommunikationsanlage (PBX) überprüft wird, für welche Nutzerkreise (NK1,...,NK5) Benutzer (Maier, Zedlitz) in der Kommunikationsanlage (PBX) gespeichert sind, und
**daß** den Benutzern jeweils in Abhängigkeit von dem Nutzerkreis (NK1,...,NK5) die in der entsprechenden Zugriffsrechte-Gruppe (ZG-1,...,ZG-5) zusammengefaßten Benutzerrechte zugewiesen werden.

5. Verfahren nach Anspruch 4,
**dadurch gekennzeichnet,**
**daß** in Fällen, in denen für einen Nutzerkreis (NK1,...,NK5) kein Benutzer gespeichert ist, die in der entsprechenden Zugriffsrechte-Gruppe (ZG-1,...,ZG-5) zusammengefaßten Benutzerrechte einem anderen Nutzerkreis (NK1,...,NK5) zugeordnet werden.

6. Verfahren nach Anspruch 3, 4 oder 5,
**dadurch gekennzeichnet,**
**daß** im Rahmen einer Anmeldung des Benutzers (Maier, Zedlitz) an der Kommunikationsanlage (PBX) vom Benutzer (Maier, Zedlitz) der Benutzername und das Paßwort an die Kommunikationsanlage (PBX) übermittelt werden, und
**daß** bei einer Übereinstimmung des übermittelten Paßwortes mit dem, dem übermittelten Benutzernamen in der Kommunikationsanlage (PBX) zugeordnet gespeicherten Paßwortes, dem Benutzer die in der entsprechenden Zugriffsrechte-Gruppe (ZG-1,...,ZG-5) zusammengefaßten Benutzerrechte durch die Kommunikationsanlage (PBX) zugewiesen werden.

## Claims

1. Method for configuring user rights for a communication system (PBX),
in which a plurality of user groups (NK1 ... NK5) are created, to which at least one user (Maier Zedlitz) and user rights can be allocated in each case, where at least one access right group (ZG-1 ... ZG-5) of respectively predefined user-group-individual user rights is permanently allocated to a first user group (NK1),
**characterised in that**
that in the event of login by a user allocated to a second user group (NK2), user rights allocated to the second user group (NK2) are automatically transferred from the first user group (NK1) to the second user group (NK2) in the form of an access right group (ZG2), where the first user group (NK1) loses the user rights of that access right group (ZG2).

2. Method according to Claim 1,
**characterised in that**
a plurality of access right groups (ZG-1 ... ZG-5) are allocated to a user group (NK1 ... NK5).

3. Method according to Claim 1 or 2,
**characterised in that**
a user name (Maier_2308, Zedlitz_2963) allocated to the user (Maier, Zedlitz), a password (123456789, 987654321) allocated to the user (Maier, Zedlitz) and information about the allocation of the user (Maier, Zedlitz) to a user group (NK1 ... NK5) are stored in the communication system (PBX).

4. Method according to Claim 3,
**characterised in that**
a check is carried out when the communication system (PBX) is started up as to which user groups (NK1 ... NK5) have users (Maier, Zedlitz) stored for them in the communication system (PBX) and that the user rights brought together in the corresponding access right group (ZG-1 ... ZG-5) are assigned to the users as a function of the user group (NK1 ... NK5) in each case.

5. Method according to Claim 4,
**characterised in that**
in cases where no user is stored for a user group (NK1 ... NK5), the user rights brought together in the corresponding access right group (ZG-1 ... ZG-5) are allocated to another user group (NK1 ... NK5).

6. Method according to Claims 3, 4 or 5,
**characterised in that**
in the context of login by the user (Maier, Zedlitz) at the communication system (PBX) by the user (Maier, Zedlitz), the user name and the password are transmitted to the communication system (PBX) and
that in the event of a match between the transmitted password and the stored password allocated to the transmitted user name in the communication system (PBX), the user rights brought together in the corresponding access right group (ZG-1 ... ZG-5) are assigned to the user by the communication system (PBX).

## Revendications

1. Procédé pour configurer des droits d'utilisateur pour un central de communication (PBX),
dans lequel est configurée une pluralité de cercles d'utilisateurs (NK1, ...., NK5), auxquels respectivement au moins un utilisateur (Maier, Zedlitz) et des droits d'utilisateur peuvent être affectés,
dans lequel au moins un groupe de droits d'accès (ZG-1, ... ZG-5) constitué de droits d'utilisateur prédéfinis, individuels au cercle d'utilisateurs est affecté de manière fixe à un premier cercle d'utilisateurs (NK1),
**caractérisé en ce que**
lors d'une demande d'un utilisateur affecté à un deuxième cercle d'utilisateur (NK2), des droits d'utilisateur affectés au deuxième cercle d'utilisateurs (NK2) sont transmis sous forme d'un groupe de droits d'accès (ZG2) automatiquement du premier cercle d'utilisateurs (NK1) au deuxième cercle d'utilisateurs (NK2), le premier cercle d'utilisateurs (NK1) perdant les droits d'utilisateur de ce groupe de droits d'accès (ZG2).

2. Procédé selon la revendication 1,
**caractérisé en ce que**
une pluralité de groupes de droits d'accès (ZG-1, ..., ZG-5) est affectée à un cercle d'utilisateurs (NK1, ... NK5).

3. Procédé selon la revendication 1 ou 2,
**caractérisé en ce que**
un nom d'utilisateur (Maier_2308, Zedlitz_2963) affecté à l'utilisateur (Maier, Zedlitz), un mot de passe (123456789, 987654321) affecté à l'utilisateur (Maier, Zedlitz) et une information sur l'affectation de l'utilisateur (Maier, Zedlitz) à un cercle d'utilisateurs (NK1, ..., NK5) sont mémorisés dans le central de communication (PBX).

4. Procédé selon la revendication 3,
**caractérisé en ce que**
lors d'un démarrage du central de communication (PBX); il est vérifié pour quels cercles d'utilisateurs (NK1, ..., NK5) des utilisateurs (Maier, Zedlitz) sont mémorisés dans le central de communication (PBX), et
**en ce que** les droits d'utilisateur regroupés dans le groupe de droits d'accès correspondant (ZG-1, ... ZG-5) sont attribués aux utilisateurs en fonction du cercle d'utilisateurs (NK1, ..., NK5).

5. Procédé selon la revendication 4,
**caractérisé en ce que**
dans les cas où aucun utilisateur n'est mémorisé pour un cercle d'utilisateurs (NK1, ..., NK5), les droits d'utilisateur regroupés dans le groupe de droits d'accès correspondant (ZG-1, ..., ZG-5) sont affectés à un autre cercle d'utilisateurs (NK1, ..., NK5).

6. Procédé selon la revendication 3, 4 ou 5,
**caractérisé en ce que**
dans le cadre d'une demande de l'utilisateur (Maier, Zedlitz) au central de communication (PBX), le nom d'utilisateur et le mot de passe sont transmis au central de communication par l'utilisateur (Maier, Zedlitz), et
**en ce qu'**en cas de concordance du mot de passe transmis avec le mot de passe mémorisé affecté au nom d'utilisateur transmis dans le central de communication (PBX), les droits d'utilisateur regroupés dans le groupe de droits d'accès correspondant (ZG-1, ... ZG-5) sont attribués à l'utilisateur au moyen du central de communication (PBX).
